# FASCICULE DE BREVET EUROPEEN

(11) **EP 0 696 895 B1**
(45) Date de publication et mention de la délivrance du brevet: **09.04.1997**
(21) Numéro de dépôt: 94913457.1
(22) Date de dépôt: 11.05.1994
(51) Int. Cl.: A47J 37/12

(54) **PANIER POUR APPAREIL DE CUISSON**
KORB FÜR GARGERÄT
BASKET FOR A COOKING APPARATUS

(43) Date de publication de la demande: 21.02.1996
(73) Titulaire: NOVA ELECTRO INTERNATIONAL N.V., B-3700 Tongeren (BE)
(72) Inventeur: BOYEN, Lodewijk, B-4432 Alleur (BE)
(74) Mandataire: Powis de Tenbossche, Roland
(86) Numéro de dépôt international: BE9400032
(87) Numéro de publication internationale: WO9426157

(56) Documents cités:
- EP-A- 0 008 838
- BE-A- 802 372
- LU-A- 64 143

## Description

La présente invention a pour objet un panier pour un appareil de cuisson, en particulier d'une friteuse.

Un tel panier est décrit dans le document EP-A-0008838. Ce panier comprend :
* un support destiné à être placé ou monté sur la cuve d'un appareil de cuisson (par exemple dans une ouverture formée dans le bord supérieur de la cuve) ;
* une poignée qui peut être pivotée par rapport au support, et
* un système qui s'étend entre le panier et la poignée et par lequel le pivotement de la poignée par rapport au support provoque le déplacement du panier dans la cuve. Ce système comprend deux barres de liaison, dont une est reliée à la poignée au moyen d'un organe de liaison mobile par rapport au support. Cette barre de liaison et la poignée sont reliées à l'organe de liaison.

Le panier selon l'invention est un panier du type décrit ci-dessus. Le panier suivant l'invention possède donc tous les avantages du panier suivant EP-A-0008838.

Le panier suivant l'invention est muni d'un mécanisme de préhension, qui compense l'écartement horizontal du panier qui est provoqué par le pivotement de la poignée (par exemple lors du mouvement vers le haut du panier). De plus, dans le panier suivant l'invention on évite le jeu entre les différentes pièces.

Au moyen du panier suivant l'invention, il est possible de maintenir le panier toujours dans un plan, par exemple dans un plan horizontal, lors du pivotement de la poignée.

Puisqu'il y a moins de jeu entre les pièces du panier suivant l'invention, il est possible de secouer avec force le panier et de mieux éliminer l'huile de frites.

Le panier suivant l'invention possède une première barre de liaison montée à pivotement sur l'organe de liaison, tandis que la deuxième barre de liaison est montée à pivotement sur le support, ladite deuxième barre de liaison étant reliée audit organe de liaison par un moyen de sorte que le déplacement de l'organe de liaison permet la rotation de ladite deuxième barre de liaison. L'axe de pivotement de la première barre suit au moins partiellement le mouvement de l'organe de liaison. Cet axe est de préférence fixe par rapport à l'organe de liaison.

Dans une forme de réalisation, l'organe de liaison présente une rainure ou fenêtre dans laquelle s'étend partiellement un élément ou partie de la deuxième barre de liaison et dans laquelle ledit élément ou partie glisse lors du mouvement de l'organe de liaison.

De préférence, la rainure ou fenêtre a une forme allongée et s'étend dans une direction sensiblement perpendiculaire par rapport à la direction dans laquelle l'organe de liaison se déplace.

Selon une autre caractéristique d'une forme de réalisation, la deuxième barre de liaison comprend deux parties reliées encre elles et qui s'étendent dans des directions différentes, l'élément de liaison ou jonction desdites deux parties étant le moyen pour permettre la rotation de la deuxième barre de liaison lors du déplacement de l'organe de liaison.

Selon un détail du panier suivant l'invention, le support est muni d'un bras sur lequel agit le panier ou partie de celui-ci lorsque l'organe de liaison est dans une position extrême de déplacement (par exemple position supérieure extrême).

L'invention a également pour objet un dispositif de sécurité ou sécurité pour une poignée d'un panier du type décrit dans EP 0008838, cette sécurité servant à maintenir le panier dans une position par rapport au support (par exemple la position extrême supérieure ou position du panier soulevé).

De façon avantageuse, la sécurité comprend une jambe qui est reliée à une tête ; par un effort exercé sur la tête, ladite jambe étant apte à être déplacée de manière telle que la jambe ou une partie de celle-ci se trouve dans une position pour laquelle après que ledit effort ne soit plus exercé, la jambe ou partie de celle-ci touche une pièce de soutien du support de manière à maintenir la position soulevée du panier.

De préférence, l'organe de liaison comprend deux plaques de soutien séparées l'une de l'autre de manière à définir entre elles un passage, tandis que la sécurité comporte un organe en forme de U dont les jambes ou ailes sont chacune munies d'une tête ou bouton, dont une partie s'étend au travers d'une ouverture de la poignée de sorte que les têtes ou boutons s'étendent partiellement à l'extérieur de la paroi de la poignée. Dans cette forme de réalisation l'organe est relié à la poignée de manière telle qu'en exerçant une pression suffisante sur les boutons, les extrémités libres des jambes se déplacent l'une vers l'autre de sorte que lesdites extrémités peuvent se déplacer dans ledit passage lors de la rotation de la poignée.

L'invention a encore pour objet un système pour éviter que la poignée peut être pivotée pour abaisser le panier lorsque le support n'est pas placé ou monté sur l'appareil de cuisson et/ou si le couvercle n'est pas fermé (position fermant la cuve).

Ce système comprend au moins un élément de verrouillage qui est actionné par un organe destiné à toucher une partie de l'appareil de cuisson de manière à déverrouiller au moins partiellement ledit élément de verrouillage.

Pour un système qui permet le pivotement de la poignée dès que le support est placé sur l'appareil, le déverrouillage de l'élément de verrouillage ou verrou est uniquement provoqué par ledit organe.

Dans une forme de réalisation, le système comprend un élément de verrouillage qui est actionné ou commandé par un organe destiné à toucher une partie du couvercle lorsque ce dernier est fermé, pour déverrouiller ledit élément de verrouillage.

D'autres particularités et détails de l'invention ressortiront de la description suivante dans laquelle il est fait référence aux dessins ci-annexés.

Dans ces dessins,
- la figure 1 est une vue partielle en coupe d'une friteuse avec un panier suivant l'invention ;

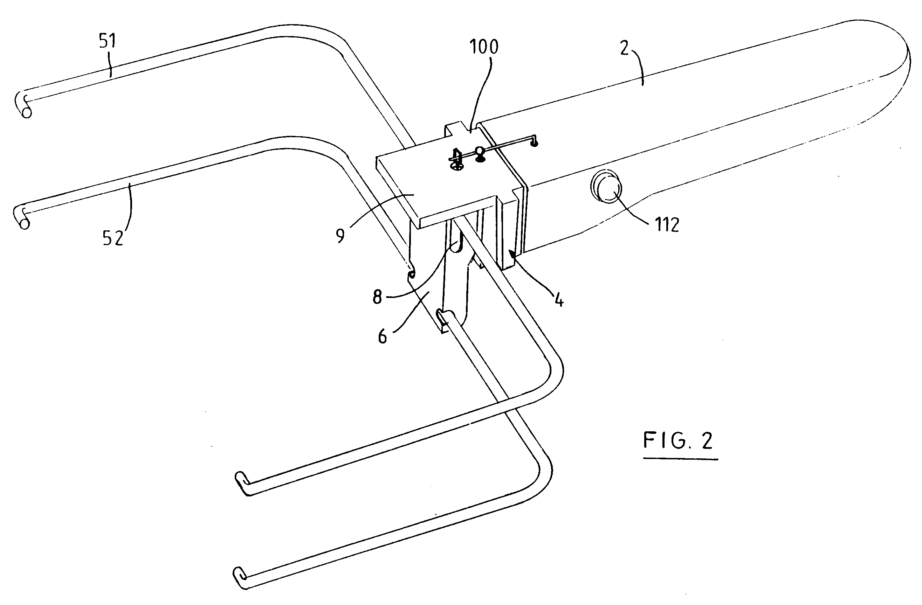

- la figure 2 est une vue partielle en perspective d'un panier suivant l'invention ;

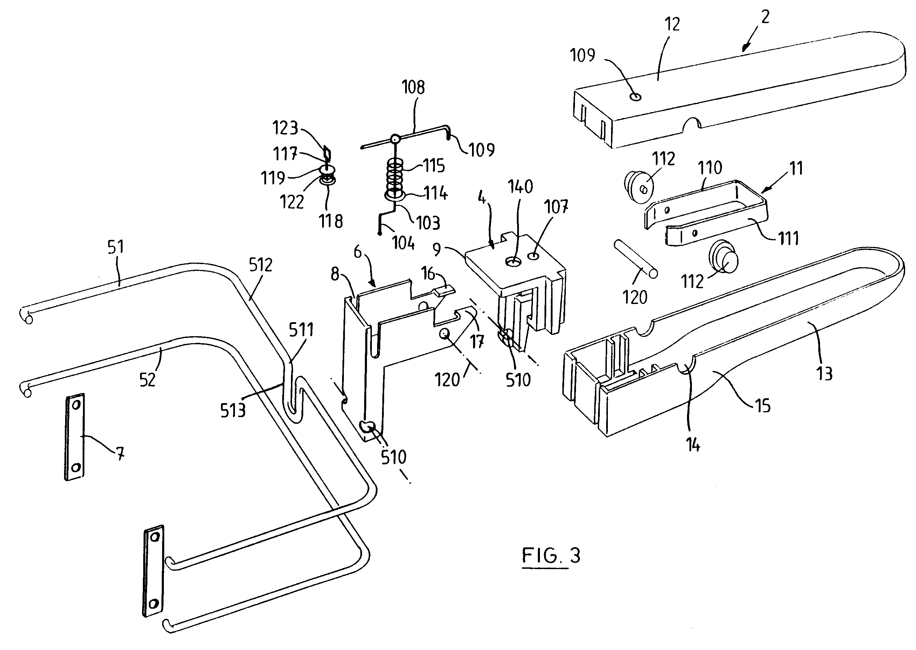

- la figure 3 est une vue en perspective des différentes pièces d'un panier suivant l'invention, et
- les figures 4 à 6 sont des vues d'un système pour empêcher le pivotement du panier.

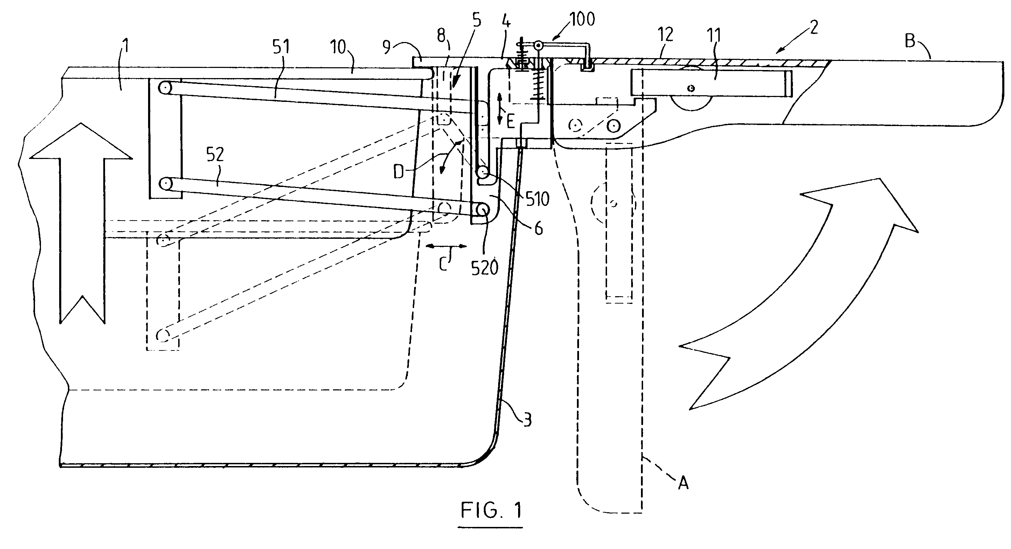

Le panier 1 de la friteuse qui est représenté à la figure 1 est muni d'une poignée 2 qui peut être déplacée d'une position sensiblement verticale (ligne interrompue A) à une position sensiblement horizontale (B) et inversement, de manière à déplacer vers le haut ou vers le bas le panier 1 dans la cuve 3.

Le panier 1 est muni d'un support 4 qui est destiné à être placé dans une ouverture de la cuve. La poignée 2 est reliée à pivotement par rapport au support (arbre 120). Lors du pivotement ou rotation de la poignée 2, le nez de cette poignée touche une surface du support 4, par quoi le système 5 pour déplacer le panier 1 dans la cuve 3 est actionné. Ce système 5 s'étend à travers le support 4 entre le panier 1 et la poignée 2. Ce système comprend une barre de liaison inférieure 52. La barre de liaison supérieure 51 est montée à pivotement sur le support 4 (arbre 510), tandis que la barre de liaison inférieure 52 est montée à pivotement sur l'organe de liaison ou de déplacement 6 (arbre 520). Les extrémités libres des barres de liaison 51,52 sont reliées à pivotement à une plaque 7 qui est fixée sur le panier 1. L'axe de pivotement 520 de la barre de liaison inférieure 52 est fixe par rapport à l'organe de liaison 6.

La barre de liaison supérieure 51 est reliée à l'organe de liaison 6 par le moyen 511 de manière à ce que le déplacement de l'organe de liaison 6 (flèche C) provoque le pivotement (flèche D) de la barre de liaison supérieure 51, tout en provoquant un mouvement de translation de l'axe de pivotement 520 de la barre de liaison inférieure 52.

Dans l'organe de liaison 6 est découpée une rainure 8 (rainure verticale) au travers de laquelle s'étend partiellement le moyen ou partie de barre 511 et dans laquelle glisse ledit moyen (flèche E) lors du déplacement de l'organe de liaison 6. La rainure 8 est allongée et s'étend dans une direction (E) qui est sensiblement perpendiculaire à la direction (C) dans laquelle l'organe de liaison 6 se déplace.

La deuxième barre de liaison ou barre de liaison supérieure 51, comprend deux parties 512, 513 qui sont reliées entre elles et qui s'étendent dans des directions différentes, le point de liaison ou élément de liaison desdites deux parties étant le moyen pour permettre la rotation de la deuxième barre de liaison lors du déplacement de l'organe de liaison. Sur le côté gauche ainsi que sur le côté droit du panier se trouvent des barres de liaison. La barre de liaison supérieure gauche est reliée à la barre de liaison supérieure droite.

Le support est muni d'un bras 9 sur lequel une partie du bord supérieur 10 du panier est poussée lorsque l'organe de liaison 6 est dans une position correspondant à la position extrême supérieure du panier.

La poignée 2 est munie d'un moyen de sécurité 11 pour maintenir ou garantir une position de l'organe de liaison 6 dans laquelle le panier est dans sa position supérieure.

Le moyen de sécurité 11 est un organe en forme de U dont les jambes 110, 111 sont chacune munies d'un bouton 112. Chaque bouton 112 s'étend partiellement hors de l'enveloppe 12, 13 de la poignée 2 et donc à travers une ouverture 14 d'une paroi latérale de l'enveloppe à deux parties.

En exerçant une pression sur les boutons, les jambes 110, 111 sont déplacées l'une vers l'autre, de manière à ce qu'elles peuvent être déplacées entre les plaques de soutien 16,17. Ces plaques de soutien sont portées par l'organe de liaison 6. Ensuite, plus aucune pression n'est exercée sur les boutons de sorte qu'après la rotation ou pivotement de la poignée 2 dans la position B, les extrémités libres des jambes 110,111 s'appuient sur les plaques de soutien 16, 17.

L'invention a encore pour objet un système pour éviter que la poignée peut être pivotée pour abaisser le panier lorsque le support n'est pas monté sur l'appareil de cuisson et de préférence lorsque le couvercle n'est pas fermé.

Ce système 100 est constitué d'un moyen de verrouillage 101 qui est actionné ou commandé par un organe 102 qui vient en contact avec une partie de l'appareil de cuisson lorsque le support est placé ou monté sur l'appareil de cuisson, de sorte que l'élément ou moyen de verrouillage est au moins partiellement déverrouillé.

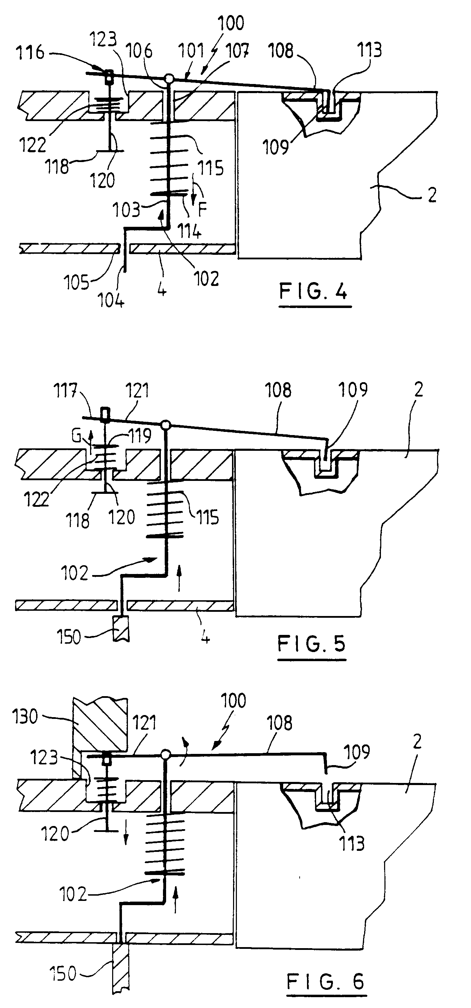

Le système 100 qui est représenté aux figures 4 à 6 comprend :
* une première pièce 103 qui s'étend depuis le bas jusqu'à la partie supérieure du support et dont une partie ou doigt 104 traverse une ouverture inférieure 105 du support, tandis qu'une autre partie 106 traverse une ouverture supérieure 107 du support ;
* une tête en forme de L 108 qui est reliée à pivotement à la partie 106 et dont l'extrémité 109 est destinée à être engagée dans une ouverture ou enfoncement ou cavité 113 de la poignée 2 pour éviter la rotation ou pivotement de la poignée lorsque le support n'est pas monté sur l'appareil de cuisson et lorsque le couvercle n'est pas 0fermé ;
* une plaque 114 qui est fixée sur la pièce 103 et qui sert de soutien à une extrémité du ressort 115 dont l'autre extrémité s'appuie sur une surface du support, le ressort exerçant une force F pour maintenir la tête 108 dans sa position de verrouillage, et
* un mécanisme 116 pour éviter le pivotement de la poignée 2 (pour déplacer le panier vers le bas) lorsque le couvercle 130 n'est pas fermé.

Le mécanisme comprend un doigt 117 qui s'étend à travers une ouverture 140 qui se trouve sur le bord supérieur du support, et sur lequel deux plaques sont fixées. Une plaque 118 est située sous le bord ou face supérieur, tandis que l'autre plaque 119 est située au-dessus du bord supérieur. Un ressort 122 s'étend entre le bord supérieur et la plaque 119 de sorte qu'une force G est exercée sur le doigt pour déplacer ce doigt vers l'extérieur. La plaque 118 sert donc de moyen pour limiter le mouvement vers l'intérieur du doigt ou tige 117.

La tête 108 est munie d'un prolongement 121 pour réaliser une liaison entre le doigt ou tige 117 et la tête 108. Cette liaison est telle que lorsqu'une force de pression est exercée sur le doigt 117 (à l'encontre de l'action du ressort 122), la tête 108 pivote de manière à ce que l'extrémité 109 n'est plus dans le creux 113, de sorte que le pivotement de la poignée pour abaisser le panier 1 est possible.

Cette liaison peut par exemple être réalisée en insérant la prolongation ou prolongement 121 dans une fente ou ouverture 123 du doigt 117.

Le fonctionnement de ce système peut être décrit comme suit :

A la figure 4, le système est dans une position pour laquelle tout pivotement de la poignée est empêché et donc pour laquelle la position levée du panier est maintenue. Dans cette position, aucune pression n'est exercée sur le doigt 104 par l'appareil de cuisson, de sorte que la force F du ressort est suffisante pour maintenir l'extrémité 109 de la tête 108 dans le creux 113.

A la figure 5, le support est monté sur l'appareil de cuisson, de sorte qu'une force est exercée sur le doigt 104 pour déplacer la pièce 103 à l'encontre de l'action du ressort 113.

A la figure 6, le couvercle est fermé de sorte que ce couvercle appuie sur le doigt 117 et provoque le pivotement de la tête 108.

La poignée 2 peut alors, après déverrouillage du moyen de verrouillage 11, être pivotée pour abaisser le panier dans la cuve.

## Revendications

1. Panier (1) pour appareil de cuisson comprenant une cuve, ledit panier (1) comprenant :
- un support (4) destiné à être monté sur l'appareil de cuisson ;
- un organe de liaison (6) mobile par rapport au support (4) ;
- une poignée (2) reliée audit organe de liaison mobile (6) de sorte que la rotation de la poignée (2) par rapport au support (4) provoque un déplacement de l'organe de liaison mobile (6), et
- deux barres de liaison reliées à pivotement au panier, une première barre de liaison (52) qui s'étend entre l'organe de liaison mobile (6) et le panier (1) étant montée à pivotement sur l'organe de liaison mobile (6),
de manière à ce que, par la rotation de la poignée (2) par rapport au support (4), l'organe de liaison (6) est déplacé pour provoquer un pivotement des barres de liaison et un déplacement du panier (1) dans la cuve de l'appareil de cuisson,
caractérisée en ce que la deuxième barre de liaison (51) est montée à pivotement sur le support (4) et reliée à l'organe de liaison (6), ledit organe de liaison présentant une rainure ou fenêtre (8) dans laquelle s'étend une partie (511) de la deuxième barre (51) ou un élément de cette deuxième barre (51), de sorte que le déplacement de l'organe de liaison (6) par la rotation de la poignée (2) provoque la rotation de la deuxième barre (51) par rapport au support (4).

2. Panier suivant la revendication 1, caractérisé en ce que le panier (1) comprend en tant que première barre de liaison (52) une barre de liaison inférieure dirigée vers le fond du panier (1), et en tant que deuxième barre de liaison (51) une barre de liaison supérieure.

3. Panier suivant l'une des revendications 1 à 2, caractérisé en ce que la rainure ou fenêtre (8) a une forme allongée et s'étend dans une direction sensiblement perpendiculaire par rapport à la direction dans laquelle l'organe de liaison (6) se déplace.

4. Panier suivant l'une des revendications 1 à 3, caractérisé en ce que la deuxième barre de liaison (51) comprend deux parties (512,513) reliées entre elles et qui s'étendent dans des directions différentes, l'élément de liaison ou jonction (511) desdites deux parties (512,513) s'étendant dans la rainure ou fenêtre (8) de l'organe de liaison (6).

5. Panier suivant l'une des revendications précédentes, caractérisé en ce que le support (4) est muni d'un bras (9) sur lequel agit le panier (1) ou partie de celui-ci lorsque l'organe de liaison (6) est dans une position extrême de déplacement.

6. Panier suivant l'une des revendications précédentes, caractérisé en ce que la poignée (2) est muni d'une sécurité (11) pour maintenir la position de l'organe de liaison pour laquelle le panier est dans sa position soulevée par rapport au support (4).

7. Panier suivant la revendication 6, caractérisé en ce que la sécurité (11) comprend une jambe (110) qui est reliée à une tête (112) ; par un effort exercé sur la tête (112), ladite jambe (110) étant apte à être déplacée de manière telle que la jambe (110) ou une partie de celle-ci se trouve dans une position pour laquelle après que ledit effort ne soit plus exercé, la jambe (110) ou partie de celle-ci touche une pièce de soutien (16) de l'organe (6) de manière à maintenir la position soulevée du panier (1).

8. Panier suivant la revendication 7, caractérisé en ce que l'organe de liaison (6) comprend deux plaques de soutien (16,17) séparées l'une de l'autre de manière à définir encre elles un passage, en ce que la sécurité (11) comporte un organe en forme de U dont les jambes ou ailes (110,111) sont chacune munies d'une tête ou bouton (112), dont une partie s'étend au travers d'une ouverture (14) de la poignée (2) de sorte que les têtes ou boutons (112) s'étendent partiellement à l'extérieur de la paroi de la poignée (2), et en ce que l'organe est relié à la poignée (2) de manière telle qu'en exerçant une pression suffisante sur les boutons (112), les extrémités libres des jambes (110,111) se déplacent l'une vers l'autre de sorte que lesdites extrémités peuvent se déplacer dans ledit passage lors de la rotation de la poignée (2).

## Claims

1. Basket (1) for cooking appliance comprising a vessel, the said basket (1) comprising:
- a support (4) intended to be mounted on the cooking appliance;
- a connecting member (6) which can move relative to the support (4);
- a handle (2) connected to the said mobile linking member (6) so that rotation of the handle (2) relative to the support (4) causes movement of the mobile linking member (6), and
- two linking bars connected with pivoting to the basket, a first linking bar (52) which stretches between the mobile linking member (6) and the basket (1) being mounted with pivoting on the mobile linking member (6),
so that by rotating the handle (2) relative to the support (4), the linking member (6) is moved so as to cause the linking bars to pivot and the basket (1) to move into the vessel of the cooking appliance,
characterized in that the second linking bar (51) is mounted with pivoting on the support (4) and connected to the linking member (6), the said linking member having a slot or opening (8) into which stretches a part (511) of the second bar (51) or an element of this second bar (51) so that the movement of the linking member (6), through the rotation of the handle (2), causes the rotation of the second bar (51) relative to the support (4).

2. Basket according to Claim 1, characterized in that the basket (1) comprises, by way of first linking bar (52), a lower linking bar directed towards the bottom of the basket (1) and, by way of second linking bar (51), an upper linking bar.

3. Basket according to one of Claims 1 to 2, characterized in that the slot or opening (8) has an elongate shape and stretches in a direction which is substantially perpendicular to the direction in which the linking member (6) moves.

4. Basket according to one of Claims 1 to 3, characterized in that the second linking bar (51) comprises two parts (512, 513) which are joined together and which stretch in different directions, the element (511) linking or joining the said two parts (512, 513) stretching into the slot or opening (8) in the linking member (6).

5. Basket according to one of the preceding claims, characterized in that the support (4) is fitted with an arm (9) on which the basket (1) or part thereof acts when the linking member (6) is in an end-of-travel position.

6. Basket according to one of the preceding claims, characterized in that the handle (2) has a safety feature (11) for keeping the linking member in a position in which the basket is in its raised position relative to the support (4).

7. Basket according to Claim 6, characterized in that the safety feature (11) comprises a leg (110) which is connected to a head (112); it being possible, by means of a force applied to the head (112), for the said leg (110) to be moved in such a way that the leg (110) or part thereof comes into a position in which, once the said force is no longer applied, the leg (110) or part thereof touches a support piece (16) of the member (6) so as to maintain the raised position of the basket (1).

8. Basket according to Claim 7, characterized in that the linking member (6) comprises two support plates (16, 17) which are separated from one another so that they define a passage between them, in that the safety feature (11) includes a U-shaped member, the legs or branches (110, 111) of which are each equipped with a head or button (112), part of which stretches through an aperture (14) in the handle (2) so that the heads or buttons (112) partially stretch outside the wall of the handle (2), and in that the member is connected to the handle (2) in such a way that by exerting sufficient pressure on the buttons (112), the free ends of the legs (110, 111) move closer together so that the said ends can move in the said passage as the handle (2) is rotated.

## Patentansprüche

1. Korb (1) für ein Kochgerät mit einem Behälter, wobei der Korb (1) folgendes umfaßt:
- einen Träger (4) zur Befestigung an dem Kochgerät;
- ein Verbindungsglied (6), das bezüglich des Trägers (4) beweglich ist;
- ein Griff (2), der so mit dem beweglichen Verbindungsglied (6) verbunden ist, daß die Drehung des Griffs (2) bezüglich des Trägers (4) ein Verschieben des beweglichen Verbindungsglieds (6) bewirkt, und
- zwei Verbindungsstangen, die schwenkbar mit dem Korb verbunden sind, wobei eine erste Verbindungsstange (52), die sich zwischen dem beweglichen Verbindungsglied (6) und dem Korb (1) erstreckt, schwenkbar an dem beweglichen Verbindungsglied (6) angebracht ist,
und zwar derart, daß das Verbindungsglied (6) durch die Drehung des Griffs (2) bezüglich des Trägers (4) so verschoben wird, daß es ein Schwenken der Verbindungsstangen und ein Verschieben des Korbs (1) in dem Behälter des Kochgeräts bewirkt,
dadurch gekennzeichnet, daß die zweite Verbindungsstange (51) schwenkbar an dem Träger (4) angebracht und mit dem Verbindungsglied (6) verbunden ist, wobei das Verbindungsglied eine Nut oder einen Ausschnitt (8) aufweist, in die bzw. in den sich ein Teil (511) der zweiten Stange (51) oder ein Element dieser zweiten Stange (51) derart erstreckt, daß das Verschieben des Verbindungsgliedes (6) durch die Drehung des Griffs (2) die Drehung der zweiten Stange (51) bezüglich des Trägers (4) bewirkt.

2. Korb nach Anspruch 1, dadurch gekennzeichnet, daß der Korb (1) als erste Verbindungsstange (52) eine untere Verbindungsstange, die zum Boden des Korbes (1) hin gerichtet ist, und als zweite Verbindungsstange (51) eine obere Verbindungsstange aufweist.

3. Korb nach Anspruch 1 oder 2, dadurch gekennzeichnet, daß die Nut oder der Ausschnitt (8) eine längliche Form aufweist und in einer im wesentlichen senkrecht zu der Richtung, in die das Verbindungsglied (6) verschoben wird, liegenden Richtung verläuft.

4. Korb nach einem der Ansprüche 1 bis 3, dadurch gekennzeichnet, daß die zweite Verbindungsstange (51) zwei Teile (512, 513) umfaßt, die miteinander verbunden sind und sich in verschiedene Richtungen erstrecken, wobei sich das Verbindungs- oder Anschlußelement (511) der beiden Teile (512, 513) in die Nut oder den Ausschnitt (8) des Verbindungsglieds (6) erstreckt.

5. Korb nach einem der vorhergehenden Ansprüche, dadurch gekennzeichnet, daß der Träger (4) mit einem Arm (9) ausgestattet ist, auf den der Korb (1) oder ein Teil desselben einwirkt, wenn sich das Verbindungsglied (6) in einer äußersten Verschiebungsposition befindet.

6. Korb nach einem der vorhergehenden Ansprüche, dadurch gekennzeichnet, daß der Griff (2) mit einer Sicherheitsvorrichtung (11) zum Beibehalten der Position des Verbindungsglieds, in der sich der Korb in seiner bezüglich des Trägers (4) angehobenen Position befindet, ausgestattet ist.

7. Korb nach Anspruch 6, dadurch gekennzeichnet, daß die Sicherheitsvorrichtung (11) einen Schenkel (110) umfaßt, der mit einem Kopf (112) verbunden ist; wobei der Schenkel (110) durch eine an den Kopf (112) angelegte Belastung derart verschoben werden kann, daß sich der Schenkel (110) oder ein Teil davon in einer Position befindet, in der, nachdem keine Belastung mehr angelegt ist, der Schenkel (110) oder ein Teil davon ein Stützteil (16) des Glieds (6) so berührt, daß die angehobene Position des Korbs (1) beibehalten wird.

8. Korb nach Anspruch 7, dadurch gekennzeichnet, daß das Verbindungsglied (6) zwei Stützplatten (16, 17) umfaßt, die so voneinander getrennt sind, daß sie zwischen sich einen Durchgang definieren, daß die Sicherheitsvorrichtung (11) ein U-förmiges Glied aufweist, dessen Schenkel oder Flügel (110, 111) jeweils mit einem Kopf oder Knopf (112) ausgestattet sind, von dem sich ein Teil derart durch eine Öffnung (14) des Griffs (2) erstreckt, daß sich die Köpfe oder Knöpfe (112) teilweise außerhalb der Wand des Griffs (2) erstrecken, und daß das Glied derart mit dem Griff (2) verbunden ist, daß sich die freien Enden der Schenkel (110, 111) durch Ausübung eines ausreichenden Druckes auf die Knöpfe (112) derart gegeneinander verschieben, daß sich die Enden bei Drehung des Griffs (2) in dem Durchgang verschieben können.
